# EUROPEAN PATENT SPECIFICATION

(11) **EP 4 513 614 B1**
(45) Date of publication and mention of the grant of the patent: **30.09.2026**
(21) Application number: 24195637.4
(22) Date of filing: 21.08.2024
(51) Int. Cl.: H01M 10/0587, H01M 50/179, H01M 50/184, H01M 50/186, H01M 50/191, H01M 50/559, H01M 50/566, H01M 50/107, H01M 50/152, H01M 50/188, H01M 50/543, H01M 10/0525

(54) **CAP, BATTERY, AND BATTERY PACK**
KAPPE, BATTERIE UND BATTERIEPACK
CAPUCHON, BATTERIE ET BLOC-BATTERIE

(30) Priority: 23.08.2023 CN 202322276210 U
(43) Date of publication of application: 26.02.2025
(73) Proprietor: Huizhou EVE Power Co., Ltd, Tonghu Town, Zhongkai High-tech District Huizhou, Guangdong 516000 (CN)
(72) Inventor: CHEN, Wen, Huizhou, Guangdong (CN); LI, Shangyi, Huizhou,Guangdong (CN); WANG, Zhiming, Huizhou, Guangdong (CN)
(74) Representative: Herrero & Asociados, S.L.

(56) References cited:
- WO-A1-2023/133853
- CN-U- 219 498 121

## Description

### TECHNICAL FIELD

The present disclosure relates to the field of batteries, and in particular to a cap, a battery, and a battery pack.

### BACKGROUND

A lithium-ion battery has a high energy density, a fast charging and discharging rate, a long cycle life, and causes no pollution. Therefore, the lithium-ion battery is widely used in portable electronic devices, communications, energy storage and electric vehicles.

A type of lithium-ion batteries is a cylindrical battery. The cylindrical battery includes a case, a winding core arranged inside the case, and a cap that covers the case. A pole is arranged on the cap. In a process of manufacturing the cylindrical battery, a hole is defined in the pole to allow the pole and a positive-electrode current collector plate to meet processing requirements for external penetration welding. After welding of the pole and the positive-electrode current collector plate is completed, in order to ensure sealing of a region of the hole and structural strength of the battery, a sealing nail is to be used during the welding.

For a sealing method in the art, since a location at which the sealing nail is placed in the hole of the pole cannot be determined, a poor welding effect may be achieved. For example, tilting up and protrusion may be caused.

CN219498121U discloses a battery cell and an electrical device including the battery cell, so as to improve the welding problem between the pole post of the battery cell and the current collector. The battery cell includes: a casing, an electrode assembly, a pole and a current collector. The electrode assembly is sealed and installed in the casing; the pole is installed through the casing in a sealed and insulated manner, and is provided with a thinned area with a thickness of T1; the current collector is arranged in the casing, and is connected to the electrode assembly The electrodes are electrically connected; the current collecting part is provided with a welding part with a thickness of T2, and T2 is greater than 0.3T1; the thinned region is in conductive contact with the welding part and fixed by welding. CN219498121U further discloses the preamble of claim 1.

WO2023133853A1 discloses a battery cell, a battery, an electric device, a method for manufacturing a battery cell, and a device. The battery cell includes: a casing including a wall; an electrode terminal, the electrode terminal is arranged on the wall, and the electrode terminal has a injection hole penetrating along its axial direction. The liquid hole, the liquid injection hole includes a first hole section and a second hole section, the second hole section is closer to the inside of the battery cell than the first hole section, and the hole diameter of the second hole section is smaller than the aperture of the first hole section; and a seal, the seal is used to seal the liquid injection hole, the seal includes a body and a limiting protrusion, and the body is sealed with the first hole section Matching, the body includes a first surface and a second surface opposite along the axial direction, the first surface faces the interior of the battery cell, the second surface faces away from the interior of the battery cell, and the limit The bit protrusion is formed on the first surface and fits with the second hole segment.

### SUMMARY OF THE DISCLOSURE

According to the present disclosure, it is provided a cap, a battery, and a battery pack according to the attached claims.

In the present disclosure, the angle θ₁ between the first portion face and the second plane of the sealing nail is greater than the angle θ₂ between the first section face and the first plane of the slot. Therefore, when the sealing nail is arranged in the slot of the pole to be welded to the pole, the side wall of the sealing nail can be supported by the slot wall of the slot. The slot wall of the slot limits the location at which the sealing nail is arranged. The sealing nail can be adjusted to be placed flatly in the slot, i.e., the second plane of the sealing nail is parallel with the first plane of the pole. A gap between the sealing nail and the slot wall at various locations may be uniform as much as possible. Compared to the technical solution in the art in which the angle θ₁ between the first portion face and the second plane is less than the angle θ₂ between the first section face of the slot and the first plane of the slot, when the sealing nail is arranged in the slot and is welded to the pole by following the present disclosure, warping, protrusions, and poor welding can be avoided.

### BRIEF DESCRIPTION OF THE DRAWINGS

FIG. 1 is a structural schematic view of a battery according to some embodiments of the present disclosure.
FIG. 2 is a cross-sectional view of the battery shown in FIG. 1.
FIG. 3 is an enlarged view of a portion I shown in FIG. 2.
FIG. 4 is a structural schematic view of a pole shown in FIG. 3.
FIG. 5 is a structural schematic view of a sealing nail shown in FIG. 3.
FIG. 6 is a structural schematic view of assembling between the pole and the sealing nail in the art.

Reference numerals in the drawings:
100 - cap, 10 - cap body, 20 - pole, 21 - slot, 22 - first plane, 23 - first section face, 24 - second section face, 30 - sealing nail, 31 - second plane, 32 - first portion face, 33 - second portion face, 34 - arc transition face, 200 - battery, 40 - case, 50 - winding core.

### DETAILED DESCRIPTION

For better understanding and implementation, technical solutions in the embodiments of the present disclosure will be clearly and completely described below by referring to the accompanying drawings in the embodiments of the present disclosure.

In the description of the present disclosure, to be noted that the terms "up", "down", "front", "rear", "left", "right", "vertical", "horizontal", "top", "bottom", "inside", "outside", and so on, indicate an orientation or positional relationship based on what is shown in the accompanying drawings. The terms are used to facilitate and simplify description of the present disclosure but do not indicate or imply that devices or elements must be arranged in a particular orientation or constructed and operated in a particular orientation.

Unless otherwise defined, all technical and scientific terms used herein have the same meaning as commonly understood by any ordinary skilled person in the art.

The present disclosure will be described below in further detail by referring to the accompanying drawings.

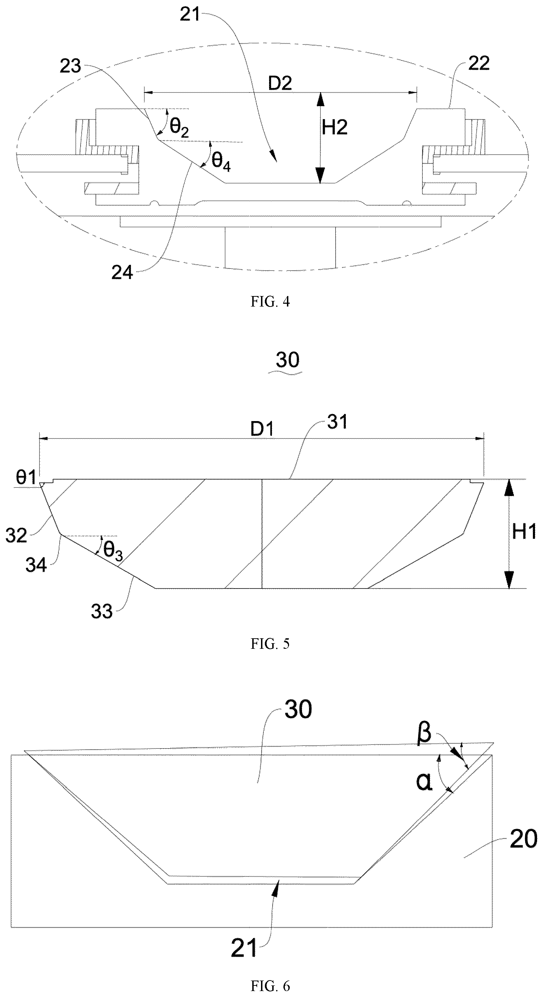

As shown in FIG. 6, which is a structural schematic view of assembling between a pole 20 on a cap body 10 and a sealing nail 30 in the art. The pole 20 defines a slot 21, and the sealing nail 30 is arranged in the slot 21. An inclination angle α is formed between a slot wall of the slot 21 and an upper surface of the pole 20. An inclination angle β is formed between a side wall of the sealing nail 30 and an upper surface of the sealing nail 30. In the art, the inclination angle α>the inclination angle β. Therefore, when the sealing nail 30 is arranged in the slot 21 during welding, due to the inclination angle of the sealing nail 30 being smaller, a location at which the sealing nail 30 is arranged in the slot 21 cannot be determined. The sealing nail 30 cannot be arranged in the slot 21 to form a flat outer surface, and the sealing nail 30 is tilted. In addition, since the sealing nail 30 is tilted, a gap between some regions of the slot wall and the sealing nail 30 may be large. Therefore, a welding effect may be poor, for example, a warped edge or a protrusion may be formed. Therefore, mating between the sealing nail 30 and the slot 21 in the art needs to be improved to prevent a poor appearance that is formed after the sealing nail is welded in the pole 20.

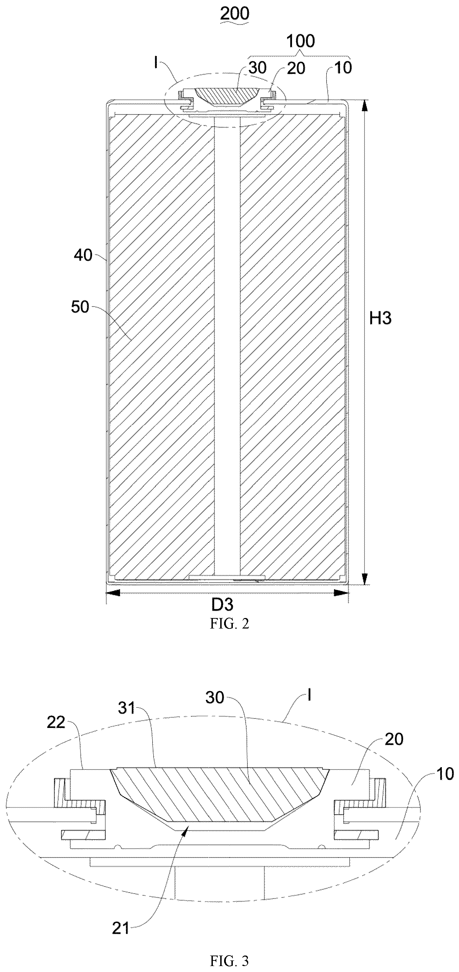

As shown in FIGS. 2 to 5, a first embodiment of the present disclosure provides a cap 100, including a cap body 10, a pole 20, and a sealing nail 30.

As shown in FIGS. 2 to 5, the pole 20 is connected to the cap body 10. The pole 20 defines a slot 21. A plane in which an upper surface of the pole 20 is located is defined as a first plane 22. The slot wall of the slot 21 includes at least a first section face 23. The first section face 23 is connected to the first plane 22. An angle between the first section face 23 and the first plane 22 is θ₂. The sealing nail 30 is arranged in the slot 21 and welded to the pole 20. A plane in which an upper surface of the sealing nail 30 is located is defined as a second plane 31. A side wall of the sealing nail 30 includes at least a first portion face 32. The first portion face 32 is connected to the second plane 31. An angle between the first portion face 32 and the second plane 31 is θ₁. The angle θ₁ > the angle θ₂.

For the cap 100, the angle θ₁ between the first portion face 32 and the second plane 31 of the sealing nail 30 is greater than the angle θ₂ between the first section face 23 and the first plane 22 of the slot 21, and therefore, when the sealing nail 30 is arranged in the slot 21 of the pole 20 to be welded to the pole 20, the side wall of the sealing nail 30 can be supported by the slot wall of the slot 21. The slot wall of the slot 21 limits the location at which the sealing nail 30 is arranged. The sealing nail 30 can be adjusted to be placed flatly in the slot 21, i.e., the second plane of the sealing nail 30 is parallel with the first plane of the pole 20. A gap between the sealing nail 30 and the slot wall at various locations may be uniform as much as possible. Compared to the technical solution in the art in which the angle θ₁ between the first portion face 32 and the second plane 31 is less than the angle θ₂ between the first section face 23 of the slot 21 and the first plane 22 of the slot 21, when the sealing nail 30 is arranged in the slot 21 and is welded to the pole by following the present disclosure, warping, protrusions, and poor welding can be avoided.

Corresponding to the angle θ₁ > angle θ₂, an outer diameter D1 of the sealing nail 30 in the present embodiment is in a range of 3mm-20mm, a diameter D2 of the slot 21 is in a range of 3mm to 30mm, and D2>D1 1. For example, when θ₁=θ₂, which is not falling under the scope of the claims, the side wall of the sealing nail 30 is just in contact with the slot wall of the slot 21, and the sealing nail 30 and the slot wall are in a clearance fit with each other. In this case, the gap between the sealing nail 30 and the slot wall is 0, and D2=D1, for example, the outer diameter of the sealing nail 30 is 3mm and the diameter of the slot 21 is also 3mm. When θ₁>θ₂ and when the sealing nail 30 needs to be arranged in the slot 21, the diameter D2 of the slot 21 needs to be greater than the outer diameter D1 of the sealing nail 30. For example, when the outer diameter D1 of the sealing nail 30 is 3mm, the diameter D2 of the slot 21 may be 3.5mm. In this way, the sealing nail 30, which has the larger inclination angle, can be arranged in the slot 21, and the location of the sealing nail 30 in the slot 21 can be adjusted.

Furthermore, in order to facilitate production of the sealing nail 30 and defining of the slot 21, in the present embodiment, the angle θ₁> the angle θ₂ and the diameter D2>the outer diameter D1. In this way, θ₁ and θ₂ being unequal to each other and the diameter D1 and the diameter D2 being unequal to each other may be prevented, and this is because if θ₁=θ₂ and D2=D1 in theory, a production error during producing the sealing nail may be different from a production error during producing the slot of the pole, leading to the angle θ₁ being unequal to the angle θ₂ and the diameter D1 being unequal to the diameter D2. The unequal angles and the unequal diameters may result in the sealing nail 30 being unable to be placed inside the slot 21 flatly, i.e., the first plane is not parallel with the second plane, and therefore, the warping and protrusion may still be caused after the welding. Therefore, in the present embodiment, the angle θ₁> the angle θ₂ and the diameter D2> the diameter D1, ensuring that the sealing nail 30 is arranged in the slot 21 flatly and can be supported by the slot wall of the slot 21, and that the location of the sealing nail 30 can be adjusted when the sealing nail 30 is arranged on the slot wall of the slot 21, such that a better welding effect is achieved.

As shown in FIGS. 3 and 4, in an embodiment, in order to improve a mating effect between the sealing nail 30 and the slot 21, the slot wall of the slot 21 of the present embodiment includes the first section face 23 and a second section face 24 connected to the first section face 23. The second section face 24 is disposed away from the first plane 22. An angle between the second section face 24 and the first plane 22 is θ₄, and the angle θ₂ > the angle θ₄. That is, the angle between the first section face 23 and the first plane 22 is larger than the angle between the second section face 24 and the first plane 22.

The side wall of the sealing nail 30 includes the first portion face 32 and a second portion face 33. The first portion face 32 is disposed corresponding to the first section face 23, and the second portion face 33 is disposed corresponding to the second section face 24. An angle between the second portion face 33 and the second plane 31 is θ₃, and the angle θ₁ > the angle θ₃. That is, the angle between the first portion face 32 and the second plane 31 is larger than the angle between the second section face 24 and the second plane 31, and the angle θ₄ ≥ the angle θ₃. That is, in the present embodiment, the slot wall of the slot 21 has two sections, and correspondingly, the side wall of the sealing nail 30 has two portions. In this way, when the sealing nail 30 is arranged in the slot 21, the sealing nail 30 can be supported by the slot wall of the slot 21, such that the mating between the sealing nail 30 and the slot wall of the slot 21 is ensured. The gap between the sealing nail 30 and the slot wall of the slot 21 can be adjusted, and an assembling gap between the sealing nail 30 and the slot wall can be reduced, and the poor welding is prevented. In addition, each of the sealing nail 30 and the slot wall of the slot 21 is arranged to have two-sectioned inclined faces, material of the sealing nail 30 is saved, and a size of the sealing nail 30 is reduced.

Specifically, in the present embodiment, the angle θ₄> the angle θ₃. This is because when the angle θ₄= the angle θ₃ in theory, a production error may be generated during producing the sealing nail, resulting in the ideal angle θ₄= the angle θ₃ being unable to be achieved. For example, a situation where the angle θ₄<the angle θ₃ may be resulted, and in this case, the sealing nail 30 cannot be arranged in the slot 21.

Further, in order to facilitate the location of the sealing nail 30 in the slot 21 to be adjusted, an arc transition surface 34 is formed between the first portion face 32 and the second portion face 33. It is understood that the arc transition surface 34 is a position that is in contact with the slot wall of the slot 21. Therefore, when the sealing nail 30 is adjusted in the slot 21, the arc transition surface 34 facilitates the sealing nail 30 to move in the slot 21 to adjust the location of the sealing nail 30 in the slot 21. In addition, when the location of the sealing nail 30 is being adjusted, the sealing nail 30 moves in the slot 21 in a sliding manner, such that friction between the slot wall of the slot 21 and the side wall of the sealing nail 30 is reduced, and the slot wall of the slot 21 is prevented from being scratched by the movement.

As shown in FIGS. 4 and 5, in an embodiment, a height H1 of the sealing nail 30 is in a range of 3mm-30 mm, and a height H2 of the slot 21 is in a range of 3mm-30 mm. In an embodiment, the height H1 of the sealing nail 30 is less than the height H2 of the slot 21. In this way, after arranging the sealing nail 30 inside the slot 21, the sealing nail 30 does not contact a bottom of the slot 21.

In the present embodiment, a welding position between the sealing nail 30 and the slot wall of the slot 21 is at an outer surface of the sealing nail 30 and a top portion of the slot wall of the slot 21. A laser source is applied to the sealing nail 30 and the pole 20 to melt the sealing nail 30 and the pole 20, and after the melted sealing nail 30 and the melted pole 20 are cooled and solidified, the sealing nail 30 and the pole 20 are connected to each other to form a one-piece and integral component.

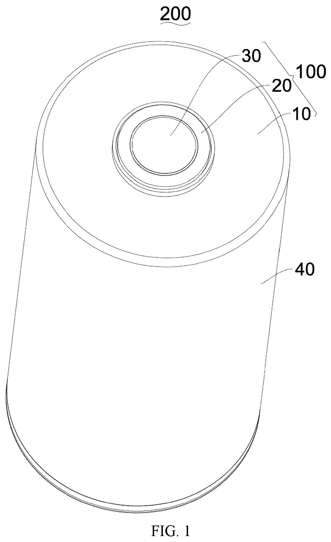

As shown in FIGS. 1 and 2, a second embodiment of the present disclosure further provides a battery 200. Specifically, the battery 200 is a cylindrical battery 200 and includes a case 40, a winding core 50, and the cover 100 as described above.

The case 40 defines a receiving space to receive the winding core 50. The winding core 50 is disposed inside the case 40. The cap 100 is configured to cover the case 40. After the cap 100 and the case 40 are assembled to each other, the cylindrical battery 200 is formed.

Specifically, an outer diameter D3 of the case 40 in the present embodiment is in a range of 20mm-80 mm, and a total height H3 of the case 40 and the cap body 10 is in a range of 80mm-160 mm. Therefore, a proper size of the case 40 and the height of the entire battery 200 can be determined based on a model of the battery 200.

A third embodiment of the present disclosure further provides a battery pack including the above-described battery.

Technical solutions of the present disclosure are not limited to the above embodiments but further include technical solutions formed by combination of any of the above technical features.

## Claims

1. A cap for a battery, comprising:
a cap body (10);
a pole (20), connected to the cap body (10); wherein, the pole (20) defines a slot (21); a plane in which an upper surface of the pole (20) is located is defined as a first plane (22); a slot wall of the slot (21) comprises at least a first section face (23); the first section face (23) is connected to the first plane (22); an acute angle formed between the first section face (23) and the first plane (22) measured toward an interior of the slot (21), is defined as θ₂; and
a sealing nail (30), arranged in the slot (21) and welded to the pole (20); wherein, a plane in which an upper surface of the sealing nail (30) is located is defined as a second plane (31); a side wall of the sealing nail (30) comprises at least a first portion face (32); the first portion face (32) is connected to the second plane (31); an acute angle formed between the first portion face (32) and the second plane (31) measured toward an interior of the sealing nail (30), is defined as θ₁;
**characterized in that**, the angle θ₁> the angle θ₂; and
a diameter D2 of the slot (21) is greater than an outer diameter D1 of the sealing nail (30).

2. The cap according to claim 1, wherein,
the slot wall of the slot (21) further comprises a second section face (24) connected to the first section face (23); wherein the second section face (24) is disposed away from the first plane (22); an acute angle formed between the first plane (22) and a plane on which the second section face (24) is located, measured toward the interior of the slot (21), is defined as θ₄, and the angle θ₂ > the angle θ₄; and
the side wall of the sealing nail (30) further comprises a second portion face (33) connected to the first portion face (32); wherein the first portion face (32) is disposed corresponding to the first section face (23), and the second portion face (33) is disposed corresponding to the second section face (24); an acute angle between the second plane (31) and a plane on which the second portion face (33) is located, measured toward the interior of the sealing nail (30), is defined as θ₃, and the angle θ₁ > the angle θ₃, the angle θ₄ ≥ the angle θ₃.

3. The cap according to claim 2, wherein, an arc transition surface (34) is formed between the first portion face (32) and the second portion face (33).

4. The cap according to claim 2, wherein, the angle θ₄ > the angle θ₃.

5. The cap according to any one of claims 1 to 4, wherein, an outer diameter D1 of the sealing nail (30) is in a range of 3mm-20mm, a diameter D2 of the slot (21) is in a range of 3mm to 30mm.

6. The cap according to any one of claims 1 to 4, wherein, a height H1 of the sealing nail (30) is in a range of 3mm-30 mm, and a height H2 of the slot (21) is in a range of 3mm-30 mm.

7. A battery, comprising:
a case (40);
a winding core (50), arranged in the case (40); and
the cap (100) according to any one of claims 1 to 6, wherein, the cap (100) covers the case (40).

8. The battery according to claim 7, wherein, an outer diameter D3 of the case (40) is in a range of 20mm-80mm, and a total height H3 of the case and the cap body (10) is in a range of 80mm-160 mm;
wherein the outer diameter D3 is greater than the diameter D2.

9. A battery pack, comprising the battery (200) according to claim 7 or 8.

## Patentansprüche

1. Eine Kappe für eine Batterie, umfassend:
einen Kappenkörper (10);
einen Pol (20), der mit dem Kappenkörper (10) verbunden ist, wobei der Pol (20) eine Aufnahme (21) definiert; eine Ebene, in der eine obere Oberfläche des Pols (20) liegt, als eine erste Ebene (22) definiert ist; eine Wand der Aufnahme (21) mindestens eine erste Abschnittsfläche (23) umfasst; die erste Abschnittsfläche (23) mit der ersten Ebene (22) verbunden ist; ein zwischen der ersten Abschnittsfläche (23) und der ersten Ebene (22) gebildeter spitzer Winkel, gemessen in Richtung des Inneren der Aufnahme (21), als θ₂ definiert ist; und
einen Dichtungsnagel (30), der in der Aufnahme (21) angeordnet und mit dem Pol (20) verschweißt ist, wobei eine Ebene, in der eine obere Oberfläche des Dichtungsnagels (30) liegt, als eine zweite Ebene (31) definiert ist; eine Seitenwand des Dichtungsnagels (30) mindestens eine erste Teilfläche (32) umfasst; die erste Teilfläche (32) mit der zweiten Ebene (31) verbunden ist; ein zwischen der ersten Teilfläche (32) und der zweiten Ebene (31) gebildeter spitzer Winkel, gemessen in Richtung des Inneren des Dichtungsnagels (30), als θ₁ definiert ist;
**dadurch gekennzeichnet, dass** der Winkel θ₁ größer als der Winkel θ₂ ist; und
ein Durchmesser D2 der Aufnahme (21) größer als ein Außendurchmesser D1 des Dichtungsnagels (30) ist.

2. Die Kappe nach Anspruch 1, wobei
die Wand der Aufnahme (21) ferner eine zweite Abschnittsfläche (24) umfasst, die mit der ersten Abschnittsfläche (23) verbunden ist, wobei die zweite Abschnittsfläche (24) von der ersten Ebene (22) abgewandt angeordnet ist; ein zwischen der ersten Ebene (22) und einer Ebene, in der die zweite Abschnittsfläche (24) liegt, gebildeter spitzer Winkel, gemessen in Richtung des Inneren der Aufnahme (21), als θ₄ definiert ist, und der Winkel θ₂ größer als der Winkel θ₄ ist;
und
die Seitenwand des Dichtungsnagels (30) ferner eine zweite Teilfläche (33) umfasst, die mit der ersten Teilfläche (32) verbunden ist, wobei die erste Teilfläche (32) entsprechend der ersten Abschnittsfläche (23) angeordnet ist und die zweite Teilfläche (33) entsprechend der zweiten Abschnittsfläche (24) angeordnet ist; ein zwischen der zweiten Ebene (31) und einer Ebene, in der die zweite Teilfläche (33) liegt, gebildeter spitzer Winkel, gemessen in Richtung des Inneren des Dichtungsnagels (30), als θ₃ definiert ist, und der Winkel θ₁ größer als der Winkel θ₃ ist, wobei der Winkel θ₄ größer oder gleich dem Winkel θ₃ ist.

3. Die Kappe nach Anspruch 2, wobei zwischen der ersten Teilfläche (32) und der zweiten Teilfläche (33) eine bogenförmige Übergangsfläche (34) ausgebildet ist.

4. Die Kappe nach Anspruch 2, wobei der Winkel θ₄ größer als der Winkel θ₃ ist.

5. Die Kappe nach einem der Ansprüche 1 bis 4, wobei ein Außendurchmesser D1 des Dichtungsnagels (30) in einem Bereich von 3 mm bis 20 mm liegt und ein Durchmesser D2 der Aufnahme (21) in einem Bereich von 3 mm bis 30 mm liegt.

6. Die Kappe nach einem der Ansprüche 1 bis 4, wobei eine Höhe H1 des Dichtungsnagels (30) in einem Bereich von 3 mm bis 30 mm liegt und eine Höhe H2 der Aufnahme (21) in einem Bereich von 3 mm bis 30 mm liegt.

7. Eine Batterie, umfassend:
ein Gehäuse (40);
einen Wickelkern (50), der in dem Gehäuse (40) angeordnet ist; und
die Kappe (100) nach einem der Ansprüche 1 bis 6, wobei die Kappe (100) das Gehäuse (40) abdeckt.

8. Die Batterie nach Anspruch 7, wobei ein Außendurchmesser D3 des Gehäuses (40) in einem Bereich von 20 mm bis 80 mm liegt und eine Gesamthöhe H3 des Gehäuses und des Kappenkörpers (10) in einem Bereich von 80 mm bis 160 mm liegt;
wobei der Außendurchmesser D3 größer als der Durchmesser D2 ist.

9. Ein Batteriepack, umfassend die Batterie (200) nach Anspruch 7 oder 8.

## Revendications

1. Un capuchon pour une batterie, comprenant :
un corps de capuchon (10) ;
un pôle (20), relié au corps de capuchon (10), dans lequel le pôle (20) définit un logement (21) ; un plan dans lequel est située une surface supérieure du pôle (20) étant défini comme un premier plan (22) ; une paroi du logement (21) comprenant au moins une première face de section (23) ; la première face de section (23) étant reliée au premier plan (22) ; un angle aigu formé entre la première face de section (23) et le premier plan (22), mesuré vers l'intérieur du logement (21), étant défini comme θ₂ ; et
un clou d'étanchéité (30), disposé dans le logement (21) et soudé au pôle (20), dans lequel un plan dans lequel est située une surface supérieure du clou d'étanchéité (30) est défini comme un deuxième plan (31) ; une paroi latérale du clou d'étanchéité (30) comprenant au moins une première face de portion (32) ; la première face de portion (32) étant reliée au deuxième plan (31) ; un angle aigu formé entre la première face de portion (32) et le deuxième plan (31), mesuré vers l'intérieur du clou d'étanchéité (30), étant défini comme θ₁ ;
**caractérisé en ce que** l'angle θ₁ est supérieur à l'angle θ₂ ; et
un diamètre D2 du logement (21) est supérieur à un diamètre extérieur D1 du clou d'étanchéité (30).

2. Le capuchon selon la revendication 1, dans lequel
la paroi du logement (21) comprend en outre une deuxième face de section (24) reliée à la première face de section (23), la deuxième face de section (24) étant disposée à distance du premier plan (22) ; un angle aigu formé entre le premier plan (22) et un plan dans lequel est située la deuxième face de section (24), mesuré vers l'intérieur du logement (21), étant défini comme θ₄, et l'angle θ₂ étant supérieur à l'angle θ₄ ;
et
la paroi latérale du clou d'étanchéité (30) comprend en outre une deuxième face de portion (33) reliée à la première face de portion (32), la première face de portion (32) étant disposée en correspondance avec la première face de section (23), et la deuxième face de portion (33) étant disposée en correspondance avec la deuxième face de section (24) ; un angle aigu entre le deuxième plan (31) et un plan dans lequel est située la deuxième face de portion (33), mesuré vers l'intérieur du clou d'étanchéité (30), étant défini comme θ₃, et l'angle θ₁ étant supérieur à l'angle θ₃, l'angle θ₄ étant supérieur ou égal à l'angle θ₃.

3. Le capuchon selon la revendication 2, dans lequel une surface de transition en arc (34) est formée entre la première face de portion (32) et la deuxième face de portion (33).

4. Le capuchon selon la revendication 2, dans lequel l'angle θ₄ est supérieur à l'angle θ₃.

5. Le capuchon selon l'une quelconque des revendications 1 à 4, dans lequel un diamètre extérieur D1 du clou d'étanchéité (30) est compris dans une plage de 3 mm à 20 mm et un diamètre D2 du logement (21) est compris dans une plage de 3 mm à 30 mm.

6. Le capuchon selon l'une quelconque des revendications 1 à 4, dans lequel une hauteur H1 du clou d'étanchéité (30) est comprise dans une plage de 3 mm à 30 mm et une hauteur H2 du logement (21) est comprise dans une plage de 3 mm à 30 mm.

7. A battery, comprising:
un boîtier (40) ;
un noyau d'enroulement (50), disposé dans le boîtier (40) ; et
le capuchon (100) selon l'une quelconque des revendications 1 à 6, le capuchon (100) recouvrant le boîtier (40).

8. La batterie selon la revendication 7, dans laquelle un diamètre extérieur D3 du boîtier (40) est compris entre 20 mm et 80 mm et une hauteur totale H3 du boîtier et du corps de capuchon (10) est comprise entre 80 mm et 160 mm ;
dans laquelle le diamètre extérieur D3 est supérieur au diamètre D2.

9. Un bloc-batterie, comprenant la batterie (200) selon la revendication 7 ou 8.
